# EUROPEAN PATENT SPECIFICATION

(11) **EP 4 354 607 B1**
(45) Date of publication and mention of the grant of the patent: **10.12.2025**
(21) Application number: 23753165.2
(22) Date of filing: 09.02.2023
(51) Int. Cl.: H01M 10/613, H01M 10/625, H01M 10/6567, H01M 50/119, H01M 50/145, H01M 50/141, H01M 50/124, H01M 50/24, H01M 50/19, H01M 50/249, H01M 50/253

(54) **BATTERY CELL, AND BATTERY MODULE COMPRISING THE SAME**
BATTERIEZELLE UND BATTERIEMODUL DAMIT
ÉLÉMENT DE BATTERIE ET MODULE DE BATTERIE LE COMPRENANT

(30) Priority: 10.02.2022 KR 20220017379
(43) Date of publication of application: 17.04.2024
(60) Divisional application: 25200895.8
(73) Proprietor: LG ENERGY SOLUTION, LTD., Seoul 07335 (KR)
(72) Inventor: JUNG, Min Yong, Daejeon 34122 (KR); CHOI, Bum, Daejeon 34122 (KR); KEUM, Jong Yoon, Daejeon 34122 (KR); CHUNG, Jae Heon, Daejeon 34122 (KR)
(74) Representative: Plasseraud IP
(86) International application number: PCT/KR2023/001890
(87) International publication number: WO 2023/153817

(56) References cited:
- CN-U- 210 640 338
- KR-A- 20150 006 103
- KR-A- 20150 069 779
- KR-A- 20160 049 713
- KR-A- 20170 107 792
- KR-A- 20170 108 156
- KR-A- 20180 112 715
- KR-A- 20210 049 327

## Description

### Technical Field

The present invention is a battery cell and a battery module comprising the same, which relates, particularly, to a direct water-cooling battery cell and a direct water-cooling battery module comprising the same, and relates, in detail, to a direct water-cooling battery cell capable of improving corrosion resistance of the battery cell by using a sacrificial metal having a higher metal ionization tendency than that of a battery cell case, and a direct water-cooling battery module comprising the same.

This application claims the benefit of priority based on Korean Patent Application No. 10-2022-0017379 dated February 10, 2022.

### Background Art

Batteries used in eco-friendly vehicles generate a large amount of heat because high power is required, and in order to improve battery performance and lifespan, it is very important to efficiently discharge heat generated from the battery, thereby preventing the batteries from overheating.

Conventionally, as a cooling system for dissipating heat from a battery, a direct air-cooling method, an indirect water-cooling method, or a direct water-cooling method is known.

The direct water-cooling method is a method in which battery cells are directly immersed in cooling water, and heat from the battery cells is directly discharged into the cooling water.

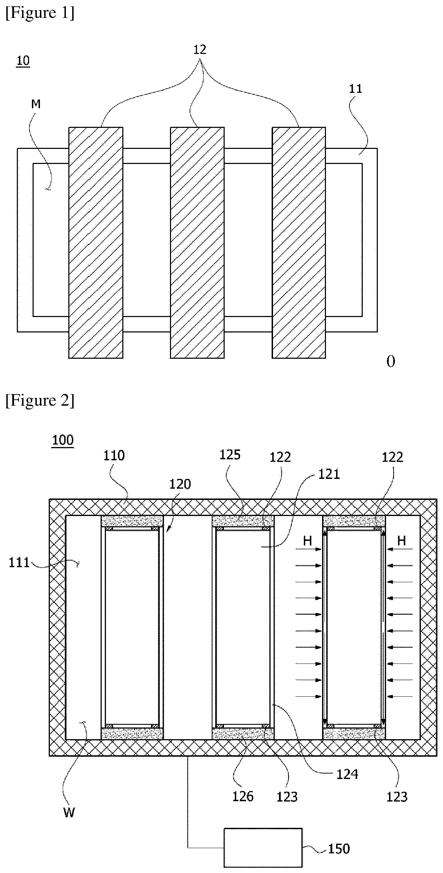

Figure 1 is a schematic configuration diagram of a conventional battery module (10).

Referring to Figure 1, a direct water-cooling type battery module (10) consists of a cell frame (11) and a plurality of battery cells (12). The plurality of battery cells (12) are spaced apart from each other in the cell frame (11). The cell frame (11) is provided so that cooling water can flow.

Generally, in the battery cell (12), an exterior case accommodating internal electrodes is made of nickel-plated iron. Accordingly, when the battery cell (12) is directly impregnated with cooling water, it is vulnerable to corrosion due to the material characteristics of the exterior case. In addition, there is a problem that the exterior case is polar and also has vulnerable electrical insulation.

In order to prevent corrosion of the battery cell (12) in the battery module (10) of the conventional direct water-cooling method, insulating oil or special cooling water (M) (e.g., 3M's NOVEC) is used.

However, the insulating oil has a problem of being vulnerable to fire, and the special cooling water such as 3M's NOVEC is excellent as a coolant for battery cells in that it is nonpolar and has corrosion resistance, but it is expensive, whereby there is a problem of increasing the manufacturing cost of the battery module.

Also, when an antirust liquid is applied to the exterior case of the battery cell in order to prevent corrosion of the battery cell as in the conventional art, a post-treatment process of covering the exterior case of the battery cell using a non-woven fabric is required to maintain the antirust liquid.

In addition, even if the antirust liquid is applied to the exterior case of the battery cell, the antirust agent flows down from the exterior case of the battery cell due to surface tension, whereby there is a problem that the antirust agent is not evenly applied to the exterior case.

Document CN 210 640 338 U relates to a battery thermal control device, in particular to a battery thermal control device with a simple structure and high heat conduction efficiency. Document KR 2015 0069779 A relates to an electrochemical device with improved corrosion resistance, and more particularly, the base metal of the metal can is oxidized by attaching a sacrificial anode having a greater ionization tendency than the base metal forming the metal can on the lower surface of the washer. Document KR 2018 0112715 relates to a battery cell including a battery case having a surface plated with an alloy.

### Disclosure

### Technical Problem

The present invention is intended to provide a direct water-cooling battery cell capable of improving corrosion resistance of a battery cell by using a sacrificial metal having a higher metal ionization tendency than that of a battery cell case, and a direct water-cooling battery module comprising the same.

### Technical Solution

A battery cell for direct water cooling according to one example of the present invention comprises an electrode assembly, a case accommodating the electrode assembly, a sacrificial metal part provided on an outer surface of the case, and formed of a material having a higher metal ionization tendency than that of the case, and a cell sheet including a metal layer, and the cell sheet is in contact with the sacrificial metal part in at least a partial region and surrounds the case.

Also, the sacrificial metal part may comprise one or more selected from the group consisting of aluminum, magnesium, zinc, an aluminum alloy, a magnesium alloy, and a zinc alloy.

In addition, the sacrificial metal part may be provided on the upper surface and the lower surface of the case, respectively, and may be provided to expose at least partial regions of the upper surface and the lower surface to the outside.

Furthermore, the sacrificial metal part may be provided to have a ring shape along the circumferential direction of the upper surface and the lower surface.

Also, the sacrificial metal part may be provided to have a C-shape along the circumferential direction of the upper surface and the lower surface.

In addition, the cell sheet comprises a pressure-sensitive adhesive layer provided on one surface of the metal layer and adhering to the case, and a waterproof layer provided on the other surface in a direction opposite to one surface of the metal layer.

Furthermore, the metal layer may be formed of a material having a higher metal ionization tendency than that of the case.

Also, the metal layer may be formed of the same material as the sacrificial metal part.

In addition, the cell sheet may surround the outer surface of the case so that one end of the cell sheet overlaps while covering the other end of the cell sheet along the circumferential direction of the case.

Furthermore, the sacrificial metal part may be laser-coupled to the outer surface of the case.

Also, the sacrificial metal part may be provided to surround a partial region of the case in a band shape.

In addition, the sacrificial metal part may be coupled along the circumference of the case at the central portion between the upper surface and the lower surface of the case.

Furthermore, the battery module for direct water cooling according to another example of the present invention comprises a plurality of direct water-cooling battery cells, a cell frame provided so that the plurality of battery cells is disposed apart from each other, and cooling water allows to flow between the plurality of battery cells, and a cooling water supply part for supplying cooling water into the cell frame.

Also, the battery module may comprise a waterproof layer provided inside the cell frame and provided to cover the side end of the upper surface and the side end of the lower surface of the case, respectively. In addition, the waterproof layer may comprise a waterproof adhesive or a potting resin.

Furthermore, the cooling water supply part may be provided to supply cooling water that is not insulated.

### Advantageous Effects

As described above, the direct water-cooling battery cell related to at least one example of the present invention, and the direct water-cooling battery module comprising the same have the following effects.

The corrosion resistance of the battery cell can be improved by using a sacrificial metal having a higher metal ionization tendency than that of the battery case. In addition, the heat of the battery cell can be cooled by using a low-cost general cooling water for vehicles that is not insulated.

Also, the corrosion resistance of the battery cell can be improved through the metal layer provided in the case, and the heat resistance, waterproofness, and insulation properties of the battery cell can be improved through the waterproof layer.

In addition, as the corrosion-resistant material (e.g., antirust agent) is contained in the pressure-sensitive adhesive, and the metal layer adhere to the case by the pressure-sensitive adhesive, the corrosion-resistant material can be evenly applied to the outer surface of the case.

Furthermore, as the overlapped interface of the metal layer is sealed, it is possible to prevent moisture and oxygen from being penetrated into the case through the overlapped interface of the metal layer when the battery cell is immersed in the cooling water at a high temperature for a long time.

### Description of Drawings

Figure 1 is a schematic configuration diagram of a conventional battery module.
Figure 2 is a configuration diagram of a direct water-cooling battery module according to a first example of the present invention.
Figure 3 schematically illustrates a perspective diagram of a battery cell according to a first example of the present invention.
Figure 4 schematically illustrates a cross section A-A of Figure 3.
Figures 5 and 6 are diagrams for explaining a state and a shape of a sacrificial metal part installed in a case according to a first example of the present invention.
Figure 7 is a configuration diagram of a direct water-cooling battery module according to a second example of the present invention.
Figure 8 is a diagram for explaining a state and a shape of a sacrificial metal part installed in a case according to a second example of the present invention.
Figure 9 schematically illustrates a perspective diagram of a battery cell according to a second example of the present invention.
Figures 10 and 11 schematically illustrate a cross section B-B of Figure 9.

### Mode for Invention

Hereinafter, a direct water-cooling battery cell according to one example of the present invention, and a direct water-cooling battery module comprising the same will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

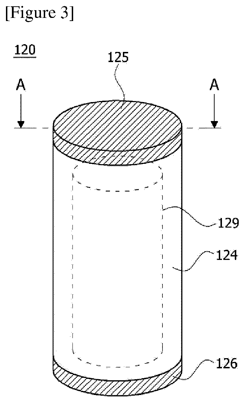

Figure 2 is a configuration diagram of a direct water-cooling battery module according to a first example of the present invention, and Figure 3 schematically illustrates a perspective diagram of a battery cell according to a first example of the present invention.

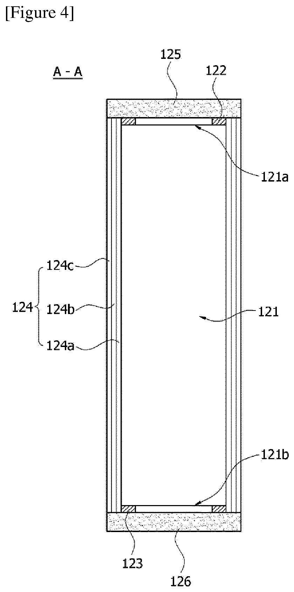

In addition, Figure 4 schematically illustrates a cross section A-A of Figure 3, and Figures 5 and 6 are diagrams for explaining a state and a shape of a sacrificial metal part installed in a case according to a first example of the present invention.

A direct water-cooling battery cell (120) related to one example of the present invention comprises an electrode assembly (129), a case (121) accommodating the electrode assembly (129), and a sacrificial metal part (122, 123) provided on an outer surface of the case (121), and formed of a material having a higher metal ionization tendency than that of the case. In addition, the battery cell (120) comprises a metal layer (124b), and comprises a cell sheet (124) provided to surround the sacrificial metal part (122, 123) and the case (121). According to the present invention, the cell sheet (124) is in contact with the sacrificial metal part (122, 123) in at least a partial region.

In addition, the electrode assembly (129) is accommodated in the case (121), and comprises a positive electrode, a negative electrode, and a separator disposed between the positive electrode and the negative electrode. The electrode and the separator may constitute an integrated electrode assembly. For example, the electrode assembly (129) may be a jelly-roll type electrode assembly in which sheet-type positive and negative electrodes are wound in a state where a separator is interposed therebetween, a stack type electrode assembly in which pluralities of positive and negative electrodes are sequentially stacked in a state where a separator is interposed therebetween, or a stack/folding type electrode assembly in which unit cells obtained by stacking positive and negative electrodes in predetermined units in a state where a separator is interposed therebetween are sequentially wound in a state where they are positioned on a separation film.

In addition, the case (121) serves to accommodate the electrode assembly (123), and to protect the battery cell (120) from external impacts. The case (121) may be cylindrical, pouch, or angular, and for example, the case may be cylindrical. In particular, the electrode assembly may be a rolled jelly-roll type electrode assembly, the case may be a cylindrical case, and the direct water-cooling battery cell (120) may be a cylindrical battery cell.

As shown in Figure 2, the direct water-cooling battery module (100) according to the present example comprises a plurality of direct water-cooling battery cells (120), a cell frame (110) provided so that the plurality of battery cells (120) is disposed apart from each other, and cooling water (W) allows to flow between the plurality of battery cells (120), and a cooling water supply part (150) for supplying cooling water into the cell frame (110).

The cell frame (110) has a predetermined space part (111) therein, and is provided in a structure in which cooling water can flow within the space part. The cooling water (W) may be supplied to the inner space part (111) of the cell frame (110), and then discharged to the outside of the cell frame (110), and to this end, the battery module (100) may comprise a cooling water discharge part for discharging the cooling water (W) to the outside of the cell frame (110). The cooling water supply part (150) may comprise a cooling water storage tank and a pump. In addition, the cooling water supply part (150) may be provided to supply cooling water (W) that is not insulated. The general cooling water (W) may be cooling water generally used in vehicles.

The direct water-cooling battery cell (120) comprises a case (121), a sacrificial metal part (122, 123), and a cell sheet (124). The cell sheet (124) comprises a pressure-sensitive adhesive layer (124a), a metal layer (124b), and a waterproof layer (124c).

Also, the case (121) may be formed of a metal material, and the surface of the case may be nickel-plated. That is, a nickel-plated layer may be provided on the surface of the case (121).

In addition, the sacrificial metal part (122, 123) may be formed of a material having a higher metal ionization reaction than that of the case (121). The sacrificial metal part (122, 123) may comprise one or more selected from the group consisting of aluminum, magnesium, zinc, an aluminum alloy, a magnesium alloy, and a zinc alloy.

Referring to Figure 4, the sacrificial metal part (122, 123) may be provided on the outer surface of the case (121). The sacrificial metal part (122, 123) may be provided on the upper surface (121a) and the lower surface (121b) of the case (121), respectively. In addition, the sacrificial metal part (122, 123) may be provided to expose at least partial regions of the upper surface and the lower surface to the outside. Each region of the upper surface and the lower surface exposed to the outside may be connected to the bus bar.

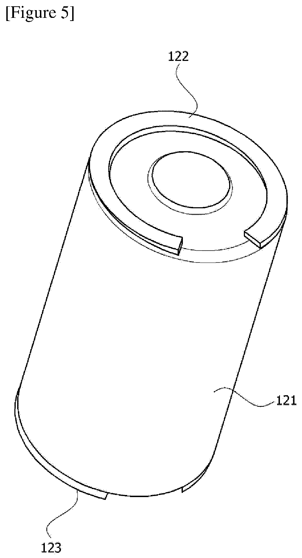

Referring to Figure 5, the sacrificial metal part (122, 123) may be provided to have a C-shape (or horseshoe shape) along the circumferential direction of the upper surface and the lower surface.

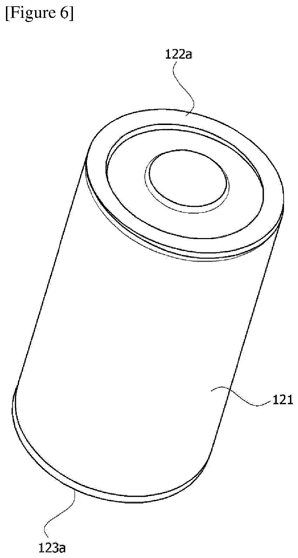

Referring to Figure 6, as another example, the sacrificial metal part (122a, 123a) may be provided to have a ring shape along the circumferential direction of the upper surface and the lower surface of the case (121).

Referring to Figure 2, when the direct water-cooling battery cell (120) is immersed in the cooling water (W), the moisture (H) of the cooling water (W) is subjected to ionization reaction with the sacrificial metal part (122, 123) due to the difference in metal ionization reaction between the case (121) and the sacrificial metal part (122, 123), and as a result, the metal ionization reaction of the case (121) is suppressed, whereby the direct water-cooling battery cell (120) can prevent corrosion of the case (121).

Referring to Figures 3 and 4, the cell sheet (124) is attached thereto to surround the outer surface of the case (121). For example, the cell sheet (124) is attached to the side surface connecting the upper surface (121a) and the lower surface (121b) of the case (121).

The cell sheet (124) comprises a pressure-sensitive adhesive layer (124a) provided on one surface of the metal layer (124b) and adhering to the case, and a waterproof layer (124c) provided on the other surface in a direction opposite to one surface of the metal layer (124b).

Referring to Figure 4, the cell sheet (124) is integrally formed by a pressure-sensitive adhesive layer (124a), a metal layer (124b), and a waterproof layer (124c).

In addition, the cell sheet (124) surrounds the outer surface of the case (121) so that one end of the cell sheet (124) overlaps while covering the other end of the cell sheet (124) along the circumferential direction of the side surface of the case (121).

In order to prevent penetration of oxygen and moisture, the metal layer (124b) may have a thickness of 20µm or more.

The metal layer (124b) may be formed of a material having a higher metal ionization reaction than that of the case (121). As one example, the metal layer (124b) may be formed of an aluminum material. In addition, the metal layer (124b) may also be formed of the same material as the sacrificial metal part (122, 123).

When the direct water-cooling battery cell (120) is immersed in the cooling water (W), the moisture (H) penetrating the metal layer (124b) may be transferred to the sacrificial metal part (122, 123) through the metal layer (124b). The reason is because the metal ionization reaction to moisture in the sacrificial metal part (122, 123) is greater than the metal ionization reaction to moisture in the case (121). Accordingly, the corrosion resistance of the case (121) can be improved.

The pressure-sensitive adhesive layer (124a) is a portion provided on one surface of the metal layer (124b) to adhere to the case (121). The pressure-sensitive adhesive layer (124a) is provided by applying a pressure-sensitive adhesive (PSA) to one surface of the metal layer (124b).

The pressure-sensitive adhesive comprises a corrosion-resistant material, where the corrosion-resistant material may be an antirust agent in which a substance such as a phosphate, a silicate, an organic acid salt, or a rubber grease is included.

In general, when only the antirust agent is applied to the case (121), the antirust agent flows down from the case (121) due to surface tension. On the contrary, in the present invention, the cell sheet (124) is attached to the case (121) by the pressure-sensitive adhesive layer (124a), so that it is possible to prevent a corrosion-resistant material (e.g., antirust agent) from flowing down from the case (121).

As the corrosion-resistant material (e.g., antirust agent) is contained in the pressure-sensitive adhesive layer (124a) and the cell sheet (124) is attached to the case (121) by the pressure-sensitive adhesive, it is possible to have an effect that the corrosion-resistant material is evenly applied to the outer surface of the case (121).

The waterproof layer (124c) is a waterproof sheet provided on the other surface of the metal layer (124b) to waterproof the metal layer (124b). The waterproof layer (124c) is a sheet having heat resistance, insulation properties, and moisture resistance, where a casting polypropylene (CPP) sheet may be used as the waterproof layer (124c).

While one end of the cell sheet (124) overlaps the other end of the cell sheet (124), the overlapped region of the cell sheet (124) is stepped. The stepped interface of the cell sheet (124) is sealed by a sealing material. The sealing material may be a material containing a resin, a plasticizer, an antioxidant, and a wax.

Alternatively, the cell sheet (124) may be tightly coupled to the metal layer (124b), while one end of the waterproof layer (124c) covers the other end of the waterproof layer (124c) and is thermally compressed at the overlapped interface.

Therefore, when the battery cell is immersed in cooling water at a high temperature for a long time, the present invention can prevent moisture and oxygen from penetrating into the case (121) through the overlapped interface of the cell sheet (124).

Meanwhile, the battery module (100) may comprise a waterproof layer (125, 126) provided inside the cell frame (110), and provided to cover the upper surface (121a) side end and the lower surface (121b) side end of the case (121), respectively. The waterproof layer (125, 126) prevent moisture from permeating into the case (121). The upper waterproof layer (125) may be provided at the upper end of the case (121), and the lower waterproof layer (126) may be provided at the lower end of the case (121). Referring to Figures 3 and 4, the waterproof layer (125, 126) may be provided to surround the sacrificial metal part (122, 123). That is, the sacrificial metal part (122, 123) inside the cell frame (110) do not contact the cooling water (W) by the waterproof layer (125, 126). In addition, the upper surface (121a) side and the lower surface (121b) side of the battery cell (120) may be fixed to the inner surface of the cell frame (110) through the waterproof layers (125, 126), respectively.

The waterproof layer (125, 126) may comprise a waterproof adhesive or a potting resin, and the potting resin may be any one of a silicone-based resin, a urethane-based resin, and an epoxy-based resin.

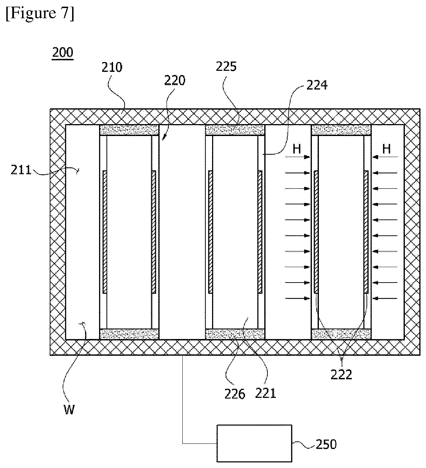

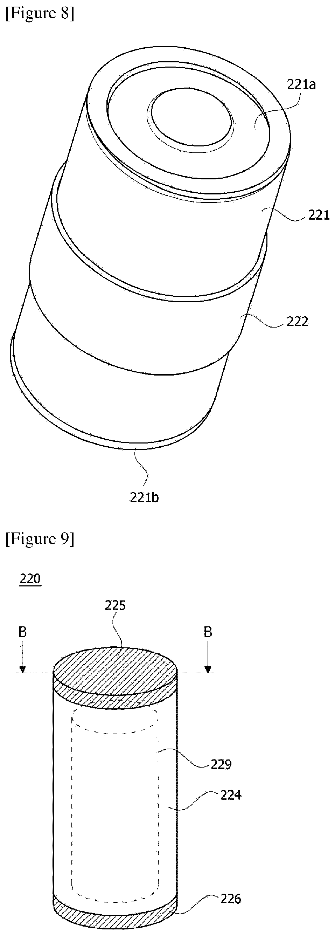

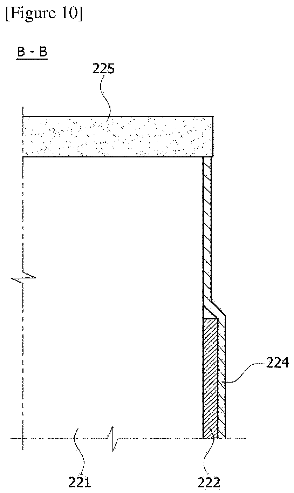

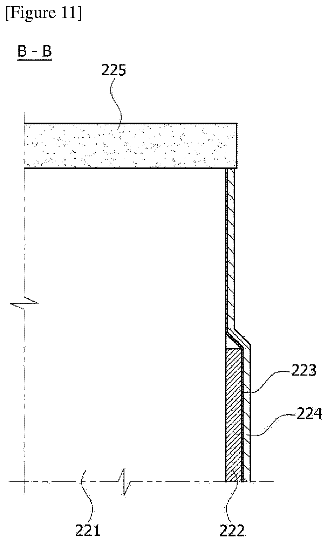

Figure 7 is a configuration diagram of a direct water-cooling battery module according to a second example of the present invention, Figure 8 is a diagram for explaining a state and a shape of a sacrificial metal part installed in a case according to a second example of the present invention, Figure 9 schematically illustrates a perspective diagram of a battery cell according to a second example of the present invention, and Figures 10 and 11 schematically illustrate a cross section B-B of Figure 9.

Referring to Figure 7, the direct water-cooling battery module (200) according to the present example comprises a plurality of direct water-cooling battery cells (220), a cell frame (210) provided so that the plurality of battery cells (220) is disposed apart from each other, and cooling water (W) allows to flow between the plurality of battery cells (220), and a cooling water supply part (250) for supplying the cooling water (W) to the inner space part (211) of the cell frame (210).

In the direct water-cooling battery module (200) according to the present example, the cell frame (210) and the cooling water supply part (250) are the same as those of the first example, so that descriptions thereof will be omitted.

Also, the direct water-cooling battery cell (220) according to the present example comprises an electrode assembly (229), a case (221) accommodating the electrode assembly (229), a sacrificial metal part (222) provided on the outer surface of the case (221), a corrosion-resistant sheet (223), and a waterproof sheet (224). In addition, the battery module (200) comprises an upper waterproof layer (225) and a lower waterproof layer (226).

Since the case (221), the upper waterproof layer (225), and the lower waterproof layer (226) are the same as those of the first example, descriptions thereof will be omitted in the present example.

In the direct water-cooling battery cell (220) according to the present example, the installation position of the sacrificial metal part (222) is different from that of the first example, and hereinafter, the sacrificial metal part (222) will be mainly described.

The sacrificial metal part (222) may be formed of a material having a higher metal ionization reaction than that of the case (221).

Referring to Figure 8, the sacrificial metal part (222) may be provided to surround a partial region of the case (221) in a band shape. In addition, the sacrificial metal part (222) may be coupled along the circumference of the case (221) at the central portion between the upper surface (221a) and the lower surface (221b) of the case (221). The sacrificial metal part (222) is coupled to the case (221) by a laser welding method.

Referring to Figures 9 and 10, the waterproof sheet (224) surrounds the sacrificial metal part (222). The waterproof sheet (224) is tightly coupled to the outer surface of the case (221) while being subjected to heat-shrinkage, whereby it is possible to prevent moisture from penetrating into the case.

The waterproof sheet (224) may be formed of a heat-shrinkable polymer material. The heat-shrinkable polymer material may comprise one or more selected from the group consisting of polyvinyl chloride (PVC), polypropylene (PP), and polyethylene terephthalate (PET).

Referring to Figure 11, in order to improve the corrosion resistance of the direct water-cooling battery module (200), after the case (221) is subjected to corrosion resistance treatment using the corrosion-resistant sheet (223) before coupling the waterproof sheet (224) to the case (221), the waterproof sheet (224) may also be coupled thereto.

Here, the corrosion-resistant sheet (223) surrounds the outer surface of the case (221) in which the sacrificial metal part (222) is included. Thereafter, the waterproof sheet (224) surrounds the corrosion resistant sheet (223) and is tightly coupled to the outer surface of the case (221) while being subjected to heat shrinkage.

The corrosion resistant sheet (223) has a material that a corrosion-resistant material is evenly absorbed. For example, as the corrosion-resistant sheet (223), a material that a corrosion-resistant material is evenly absorbed, for example, a cloth structure such as non-woven fabrics or cotton fabrics, can be used.

The corrosion-resistant sheet (223) may be bonded to the case (221), as a sheet adhesive is applied in a melted state by a hot melting method and then cooled. Here, an acrylic adhesive may be used as the sheet adhesive.

As the corrosion-resistant material (e.g., antirust agent) contacts the case (221) in a state where it is evenly absorbed over the entire area of the corrosion-resistant sheet (223), it is possible to have the effect of evenly applying the corrosion-resistant material to the outer surface of the case (221).

### Industrial Applicability

According to the direct water-cooling battery cell related to at least one example of the present invention, and the direct water-cooling battery module comprising the same, the corrosion resistance of the battery cell can be improved by using a sacrificial metal having a higher metal ionization tendency than that of the battery case.

## Claims

1. A battery cell (120) comprising:
an electrode assembly (129);
a case (121) accommodating the electrode assembly (129);
a sacrificial metal part (122, 123) provided on an outer surface of the case (121), and formed of a material having a higher metal ionization tendency than that of the case (121); and
a cell sheet (124) including a metal layer (124b), and the cell sheet (124) is in contact with the sacrificial metal part (122, 123) in at least a partial region and surrounds the case (121),
wherein the cell sheet (124) comprises
a pressure-sensitive adhesive layer (124a) provided on one surface of the metal layer (124b) and adhering to the case (121), the pressure-sensitive adhesive layer (124a) comprising a corrosion-resistant material, and
a waterproof layer (124c) provided on the other surface in a direction opposite to one surface of the metal layer (124b).

2. The battery cell (120) according to claim 1, wherein
the sacrificial metal part (122, 123) comprises one or more selected from the group consisting of aluminum, magnesium, zinc, an aluminum alloy, a magnesium alloy, and a zinc alloy.

3. The battery cell (120) according to claim 1, wherein
the sacrificial metal part (122, 123) is provided on an upper surface and a lower surface of the case (121), respectively, and is provided to expose at least partial regions of the upper surface and the lower surface to the outside.

4. The battery cell (120) according to claim 3, wherein
the sacrificial metal part (122, 123) is provided to have a ring shape along a circumferential direction of the upper surface and the lower surface.

5. The battery cell according to claim 3, wherein
the sacrificial metal part (122, 123) is provided to have a C-shape along a circumferential direction of the upper surface and the lower surface.

6. The battery cell (120) according to claim 1, wherein
the metal layer (124b) is formed of a material having a higher metal ionization tendency than that of the case (121).

7. The battery cell (120) according to claim 6, wherein
the metal layer (124b) is formed of the same material as the sacrificial metal part (122, 123).

8. The battery cell (120) according to claim 1, wherein
the cell sheet (124) surrounds the outer surface of the case (121) so that one end of the cell sheet (124) overlaps while covering an other end of the cell sheet (124) along a circumferential direction of the case (121).

9. The battery cell (120) according to claim 1, wherein
the sacrificial metal part (122, 123) is laser-coupled to the outer surface of the case (121).

10. The battery cell (120) according to claim 1, wherein
the sacrificial metal part (122, 123) surrounds a partial region of the case (121) in a band shape.

11. The battery cell (120) according to claim 10, wherein
the sacrificial metal part (122, 123) is coupled along a circumference of the case (121) at the central portion between an upper surface and a lower surface of the case (121).

12. A battery module (100) comprising:
a plurality of battery cells (120) according to claim 1;
a cell frame (110) provided so that the plurality of battery cells (120) is disposed apart from each other, and cooling water allows to flow between the plurality of battery cells (120); and
a cooling water supply part (150) for supplying cooling water into the cell frame (110).

13. The battery module (100) according to claim 12, wherein
the battery module (100) comprises a waterproof layer provided inside the cell frame (110) and provided to cover a side end of the upper surface and a side end of the lower surface of the case (121), respectively, where
the waterproof layer (125, 126) comprises a waterproof adhesive or a potting resin.

14. The battery module (100) according to claim 13, wherein
the cooling water supply part (150) is provided to supply cooling water that is not insulated.

## Patentansprüche

1. Batteriezelle (120), umfassend:
eine Elektrodenanordnung (129);
ein Gehäuse (121), welches die Elektrodenanordnung (129) aufnimmt;
einen Opfermetallteil (122, 123), welcher an einer äußeren Fläche des Gehäuses (121) bereitgestellt ist und welcher aus einem Material gebildet ist, welches eine höhere Metallionisierungstendenz aufweist als die des Gehäuses (121); und
eine Zellenbahn (124), welche eine Metallschicht (124b) umfasst, und wobei die Zellenbahn (124) in wenigstens einem Teilbereich in Kontakt mit dem Opfermetallteil (122, 123) ist und das Gehäuse (121) umgibt,
wobei die Zellenbahn (124) umfasst:
eine druckempfindliche Haftmittelschicht (124a), welche an einer Fläche der Metallschicht (124b) bereitgestellt ist und an dem Gehäuse (121) anhaftet, wobei die druckempfindliche Haftmittelschicht (124a) ein korrosionsbeständiges Material umfasst, und
eine wasserdichte Schicht (124c), welche in einer Richtung, welche entgegengesetzt zu einer Fläche der Metallschicht (124b) ist, an der anderen Fläche bereitgestellt ist.

2. Batteriezelle (120) nach Anspruch 1, wobei
der Opfermetallteil (122, 123) eines oder mehrere umfasst, ausgewählt aus der Gruppe, bestehend aus Aluminium, Magnesium, Zink, einer Aluminiumlegierung, einer Magnesiumlegierung und einer Zinklegierung.

3. Batteriezelle (120) nach Anspruch 1, wobei
der Opfermetallteil (122, 123) an einer oberen Fläche bzw. einer unteren Fläche des Gehäuses (121) bereitgestellt ist und bereitgestellt ist, um wenigstens Teilbereiche der oberen Fläche und der unteren Fläche nach außen zu exponieren.

4. Batteriezelle (120) nach Anspruch 3, wobei
der Opfermetallteil (122, 123) bereitgestellt ist, um entlang einer Umfangsrichtung der oberen Fläche und der unteren Fläche eine Ringform aufzuweisen.

5. Batteriezelle (120) nach Anspruch 3, wobei
der Opfermetallteil (122, 123) bereitgestellt ist, um entlang einer Umfangsrichtung der oberen Fläche und der unteren Fläche eine C-Form aufzuweisen.

6. Batteriezelle (120) nach Anspruch 1, wobei
die Metallschicht (124b) aus einem Material gebildet ist, welches eine höhere Metallionisierungstendenz aufweist als die des Gehäuses (121).

7. Batteriezelle (120) nach Anspruch 6, wobei
die Metallschicht (124b) aus dem gleichen Material wie der Opfermetallteil (122, 123) gebildet ist.

8. Batteriezelle (120) nach Anspruch 1, wobei
die Zellenbahn (124) die äußere Fläche des Gehäuses (121) umgibt, so dass ein Ende der Zellenbahn (124) überlappt, während es ein anderes Ende der Zellenbahn (124) entlang einer Umfangsrichtung des Gehäuses (121) abdeckt.

9. Batteriezelle (120) nach Anspruch 1, wobei
der Opfermetallteil (122, 123) mit der äußeren Fläche des Gehäuses (121) lasergekoppelt ist.

10. Batteriezelle (120) nach Anspruch 1, wobei
der Opfermetallteil (122, 123) einen Teilbereich des Gehäuses (121) in einer Bandform umgibt.

11. Batteriezelle (120) nach Anspruch 10, wobei
der Opfermetallteil (122, 123) entlang eines Umfangs des Gehäuses (121) an dem zentralen Abschnitt zwischen einer oberen Fläche und einer unteren Fläche des Gehäuses (121) gekoppelt ist.

12. Batteriemodul (100), umfassend:
eine Mehrzahl von Batteriezellen (120) nach Anspruch 1;
einen Zellenrahmen (110), welcher derart bereitgestellt ist, dass die Mehrzahl von Batteriezellen (120) getrennt voneinander angeordnet sind, und dass ein Fließen von Kühlwasser zwischen der Mehrzahl von Batteriezellen (120) ermöglicht ist; und
einen Kühlwasser-Zuführteil (150) zum Zuführen von Kühlwasser in den Zellenrahmen (110).

13. Batteriemodul (100) nach Anspruch 12, wobei
das Batteriemodul (100) eine wasserdichte Schicht umfasst, welche innerhalb des Zellenrahmens (110) bereitgestellt ist und bereitgestellt ist, um ein seitliches Ende der oberen Fläche bzw. ein seitliches Ende der unteren Fläche des Gehäuses (121) abzudecken,
wobei die wasserdichte Schicht (125, 126) ein wasserdichtes Haftmittel oder ein Vergussharz umfasst.

14. Batteriemodul (100) nach Anspruch 13, wobei
der Kühlwasser-Zuführteil (150) bereitgestellt ist, um Kühlwasser zuzuführen, welches nicht isoliert ist.

## Revendications

1. Élément de batterie (120) comprenant :
un ensemble d'électrodes (129) ;
un boîtier (121) contenant l'ensemble d'électrodes (129) ;
une partie en métal sacrificiel (122, 123) fournie sur une surface extérieure du boîtier (121), et formée d'un matériau ayant une tendance à l'ionisation métallique plus grande que celle du boîtier (121) ; et
une feuille d'élément (124) comportant une couche métallique (124b), et la feuille d'élément (124) est en contact avec la partie en métal sacrificiel (122, 123) dans au moins une région partielle et entoure le boîtier (121),
dans lequel la feuille d'élément (124) comprend
une couche adhésive sensible à la pression (124a) fournie sur une surface de la couche métallique (124b) et adhérant au boîtier (121), la couche adhésive sensible à la pression (124a) comprenant un matériau résistant à la corrosion, et
une couche imperméable (124c) fournie sur l'autre surface dans une direction opposée à une surface de la couche métallique (124b).

2. Élément de batterie (120) selon la revendication 1, dans lequel
la partie en métal sacrificiel (122, 123) comprend un ou plusieurs métaux sélectionnés dans le groupe constitué d'aluminium, de magnésium, de zinc, d'un alliage d'aluminium, d'un alliage de magnésium, et d'un alliage de zinc.

3. Élément de batterie (120) selon la revendication 1, dans lequel
la partie en métal sacrificiel (122, 123) est fournie sur une surface supérieure et une surface inférieure du boîtier (121), respectivement, et est fournie pour exposer au moins des régions partielles de la surface supérieure et de la surface inférieure à l'extérieur.

4. Élément de batterie (120) selon la revendication 3, dans lequel
la partie en métal sacrificiel (122, 123) est fournie pour avoir une forme d'anneau le long d'une direction circonférentielle de la surface supérieure et de la surface inférieure.

5. Élément de batterie selon la revendication 3, dans lequel
la partie en métal sacrificiel (122, 123) est fournie pour avoir une forme de C le long d'une direction circonférentielle de la surface supérieure et de la surface inférieure.

6. Élément de batterie (120) selon la revendication 1, dans lequel
la couche métallique (124b) est formée d'un matériau ayant une tendance à l'ionisation métallique plus grande que celle du boîtier (121).

7. Élément de batterie (120) selon la revendication 6, dans lequel
la couche métallique (124b) est formée du même matériau que la partie en métal sacrificiel (122, 123).

8. Élément de batterie (120) selon la revendication 1, dans lequel
la feuille d'élément (124) entoure la surface extérieure du boîtier (121) de façon à ce qu'une extrémité de la feuille d'élément (124) chevauche tout en couvrant une autre extrémité de la feuille d'élément (124) le long d'une direction circonférentielle du boîtier (121).

9. Élément de batterie (120) selon la revendication 1, dans lequel
la partie en métal sacrificiel (122, 123) est accouplée par laser à la surface extérieure du boîtier (121).

10. Élément de batterie (120) selon la revendication 1, dans lequel
la partie en métal sacrificiel (122, 123) entoure une région partielle du boîtier (121) en une forme de bande.

11. Élément de batterie (120) selon la revendication 10, dans lequel
la partie en métal sacrificiel (122, 123) est accouplée le long d'une circonférence du boîtier (121) au niveau de la partie centrale entre une surface supérieure et une surface inférieure du boîtier (121).

12. Module de batterie (100) comprenant :
une pluralité d'éléments de batterie (120) selon la revendication 1 ;
un cadre d'élément (110) fourni de façon à ce que la pluralité d'éléments de batterie (120) soient disposés à l'écart les uns des autres, et de l'eau de refroidissement puisse s'écouler entre la pluralité d'éléments de batterie (120) ; et
une partie d'alimentation en eau de refroidissement (150) pour alimenter en eau de refroidissement le cadre d'élément (110).

13. Module de batterie (100) selon la revendication 12, dans lequel
le module de batterie (100) comprend une couche imperméable fournie à l'intérieur du cadre d'élément (110) et fournie pour couvrir une extrémité latérale de la surface supérieure et une extrémité latérale de la surface inférieure du boîtier (121), respectivement, où
la couche imperméable (125, 126) comprend un adhésif imperméable ou une résine d'enrobage.

14. Module de batterie (100) selon la revendication 13, dans lequel
la partie d'alimentation en eau de refroidissement (150) est fournie pour une alimentation en eau de refroidissement qui n'est pas isolée.
